# EUROPEAN PATENT APPLICATION

(11) **EP 1 953 446 A1**
(43) Date of publication of application: **06.08.2008**
(21) Application number: 07002335.3
(22) Date of filing: 02.02.2007
(51) Int. Cl.: F21K 7/00, A61C 19/00

(54) **Cascadable lighting module**

(71) Applicant: Swiss Medical Technology GmbH, 9443 Widnau (CH)
(72) Inventor: Luber, Joachim, 9430 St. Margrethen (CH)
(74) Representative: Zwicker, Jörk

(57) **Abstract**

According to a first aspect of the invention a lighting module is provided comprising a base body and a plurality of light sources. The base body is essentially of cuboid shape having two end walls, a bottom wall, a top wall and a first side wall and is further defined by a substantially arc shaped cut-out in the second side wall thereof. The portion of the base body defined by the arc shaped cut-out is made up of a plurality of planar wall panels arranged side-by-side, wherein each planar wall panel supports a respective light source of the plurality of light sources. Each light source comprises a support enclosing a respective LED and a respective collimating lens mounted on top of each support such that the central axis of the light beam produced by each LED and focused by the respective collimating lens runs essentially normal to the respective planar wall panel. The plurality of planar wall panels are arranged in such a way that the light beams produced by the plurality of LEDs are directed at a common illumination area. Preferably the common illumination area is offset from the plane running parallel to and being disposed half way between the top wall and the bottom wall of the base body in the direction of the bottom wall. Furthermore, a back-to-back arrangement of such lighting modules is disclosed.

## Description

### TECHNICAL FIELD OF THE INVENTION

The invention relates to a lighting module for feeding light into an input port of an optical instrument or an optical fiber and in particular into a light input port or an interface of a surgical microscope.

### BACKGROUND OF THE INVENTION

In the medical field, often external lighting sources are used to illuminate the field of view of an imaging unit, such as a surgical microscope, a loupe, a lens or the like. In many cases optical fibers are used to guide the light from the light source to the field of view of the surgical microscope or to a light input port thereof. Conventionally powerful xenon lamps or arc lamps (having illuminating powers in the order of tens to hundreds of watts) are employed as light sources which are connected e.g. to a surgical microscope via a standard interface. These xenon lamps or arc lamps, however, have a rather short life-time and their replacement is very costly.

In many fields light emitting diodes (LED) are being more and more employed which are much more inexpensive than xenon or arc lamps. However, in comparison with xenon or arc lamps LEDs only have a small illuminating power in the order of a few watts. Although the combination of several LEDs could provide for correspondingly larger illuminating powers, no lighting device based on LEDs is known which provides illuminating powers comparable to those of small xenon or arc lamps and which can be coupled to a standard light input port or interface of an imaging unit, such as a surgical microscope.

There is, thus, a need for an inexpensive lighting device based on LEDs suitable to replace conventional small xenon or arc lamps in the medical field.

### SUMMARY OF THE INVENTION

According to a first aspect of the invention a lighting module is provided comprising a base body and a plurality of light sources. The base body is essentially of cuboid shape having two end walls, a bottom wall, a top wall and a first side wall and is further defined by a substantially arc shaped cut-out in the second side wall thereof. The portion of the base body defined by the arc shaped cut-out is made up of a plurality of planar wall panels arranged side-by-side, wherein each planar wall panel supports a respective light source of the plurality of light sources. Each light source comprises a support enclosing a respective LED and a respective collimating lens mounted on top of each support such that the central axis of the light beam produced by each LED and focused by the respective collimating lens runs essentially normal to the respective planar wall panel. The plurality of planar wall panels are arranged in such a way that the light beams produced by the plurality of LEDs are directed at a common illumination area.

Preferably the common illumination area is offset from the plane running parallel to and being disposed half way between the top wall and the bottom wall of the base body in the direction of the bottom wall.

Preferably, the positions of the supports enclosing a respective LED on each planar wall panel lies along a circular arc whose origin coincides with the center of the common illumination area and/or the planar wall panels are vertically inclined in the direction of the common illumination area.

Optionally, the endpoints of the cut-out are located close to the respective end walls of the base body and the apex of the cut-out lies more than half way in the direction of the first side wall of the base body.

Preferably, the plurality of LEDs comprises white LEDs, blue LEDs and yellow LEDs. Optionally, the lighting module furthermore comprises a control unit for individually controlling the LEDs such that the lighting module can produce white light, yellow light or blue light.

Preferably, the lighting module comprises eight LEDs. Optionally, the angle between the central axes of two light beams produced by two adjacent LEDs is about 18°. Preferably the base body has a length of approximately 23 cm, a width of approximately 10 cm and a height of approximately 3.5 cm.

Preferably, the base body is solid and made of aluminium. Optionally, a cooling device can be embedded within the base body.

According to a second aspect of the present invention an arrangement of at least two lighting modules according to the first aspect of the invention is provided, wherein the bottom walls of the at least two lighting modules are arranged in a face contacting, spaced relationship such that the common illumination areas of the two lighting modules substantially overlap.

Preferably, the arrangement according to the second aspect of the present invention is mounted to a housing and the substantially overlapping common illumination areas coincide with a light input port of an external imaging device or an end face of an optical fiber.

Further preferred beneficial embodiments are defined in the additional sub-claims.

### BRIEF DESCRIPTION OF THE DRAWINGS

FIGURE 1 shows a perspective view of a lighting module according to a preferred embodiment of the present invention.
FIGURE 2 shows a side view of the lighting module according to the preferred embodiment of the present invention of figure 1.
FIGURE 3 shows another perspective view of the lighting module according to the preferred embodiment of the present invention of figure 1.
FIGURE 4 shows another perspective view of the lighting module according to the preferred embodiment of the present invention of figure 1.
FIGURE 5 shows a perspective view of an arrangement of two lighting modules according to a preferred embodiment of the present invention within a first portion of a housing.
FIGURE 6 shows another perspective view of the arrangement of two lighting modules according to the preferred embodiment of the present invention within a first portion of a housing of figure 5.
FIGURE 7 shows another perspective view of the arrangement of two lighting modules according to the preferred embodiment of the present invention within a first portion of a housing of figure 5.
FIGURE 8 shows a plan view of the arrangement of two lighting modules according to the preferred embodiment of the present invention within a first portion of a housing of figure 5.

### DETAILED DESCRIPTION OF PREFERRED EMBODIMENTS

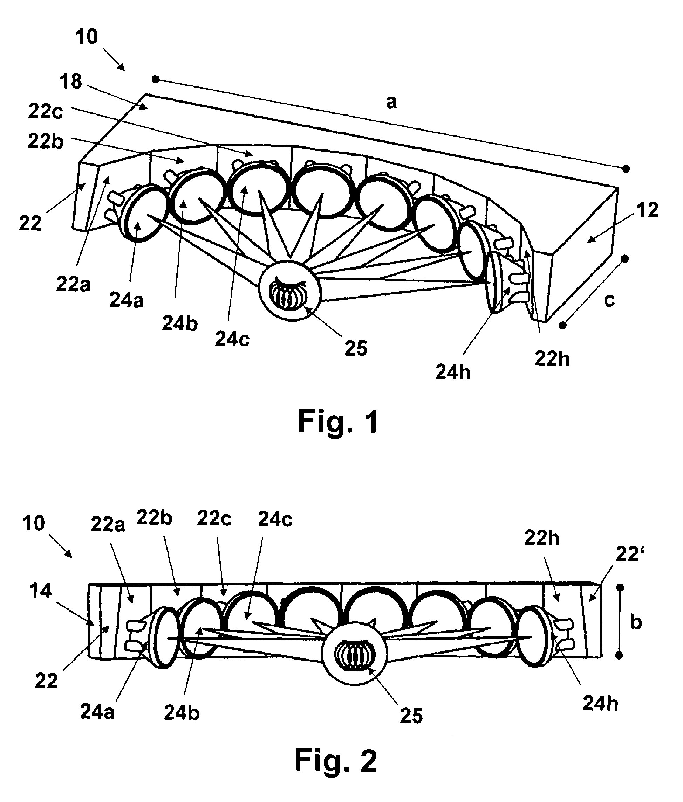

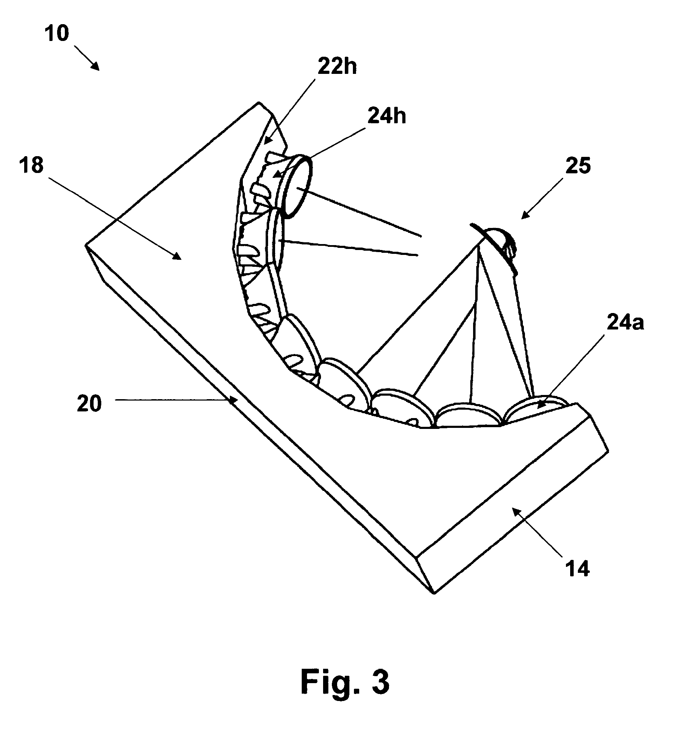

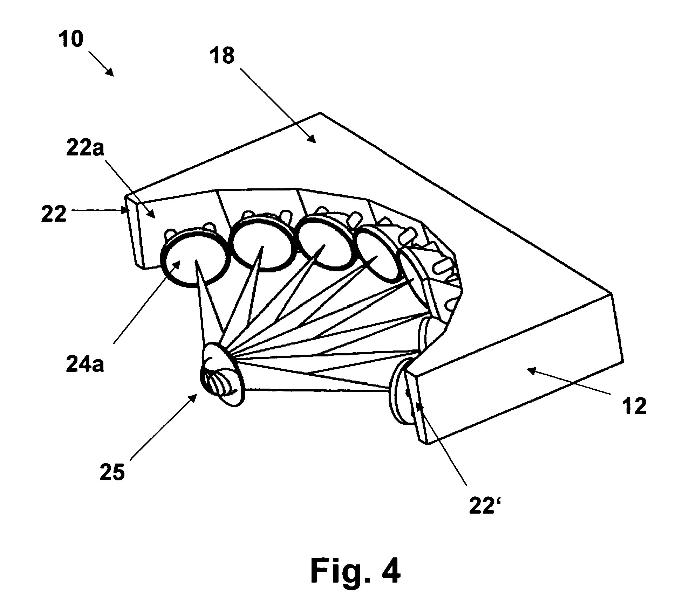

A preferred embodiment of a lighting module according to the present invention is shown in figures 1 to 4. The lighting module 10 comprises a base body essentially of cuboid shape (i.e. a three-dimensional rectangle) having a length a, a height b and a depth c. The base body has oppositely arranged end walls or end faces 12, 14 with edges of lengths b and c, a top wall or top face 18 and a bottom wall or bottom face 16 (not shown) with edges of lengths a and c and a first side wall or side face 20 (shown in figure 3) with edges of lengths a and b.

As can be best seen in figures 1, 3 and 4, opposite to the first side wall 20 the base body is defined by a substantially arc-shaped cut out along the whole height c and nearly the whole length a thereof such that essentially only two small trapezoidal panels 22 and 22' are disposed at a distance b parallel to the first side wall 20. Or, to put it differently, the "end points" of the substantially arc-shaped cut out are located close to the respective end walls 12, 14 of the base body, i.e. the length of the line connecting the two end points of the substantially arc-shaped cut out is only a bit smaller than the length a of the first side wall 20.

As can most easily be seen in figure 3, the apex of the substantially arc-shaped cutout is located more than half way in the direction of the first sidewall 20. In other words, the perpendicular distance between the first side wall 20 and the apex of the substantially arc-shaped cut-out (i.e. the distance normal to the first side wall 20) is preferably less than c/2.

In between the two end points the substantially arc-shaped cut out of the base body of the lighting module according to the preferred embodiment is defined by eight trapezoidal planar wall panels 22a to 22h of approximately the same size. The person skilled in the art, however, will appreciate in the light of the present description that the exact number of these planar wall panels is not essential to the invention and that correspondingly also less or more panels could be employed.

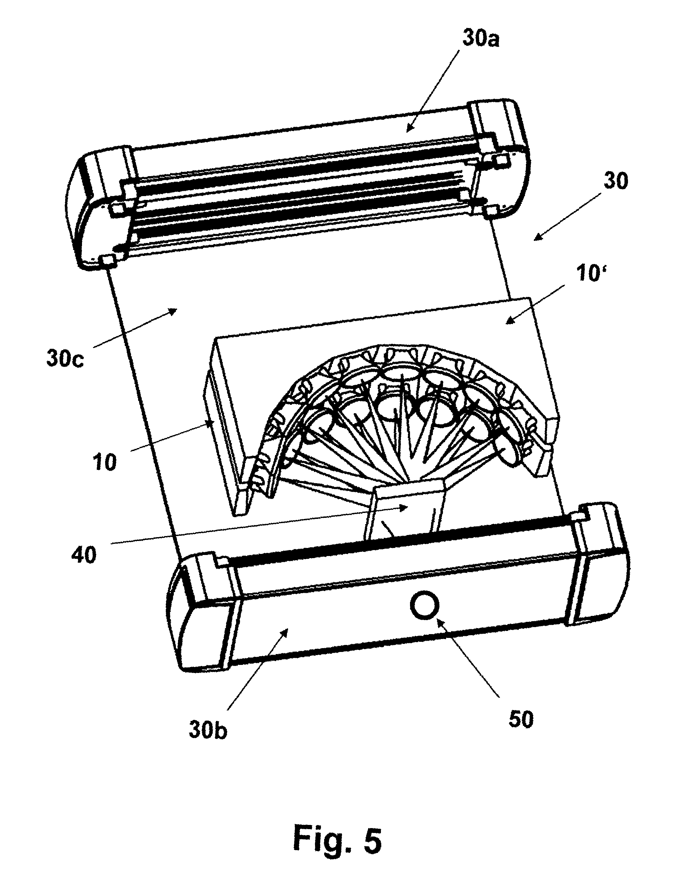

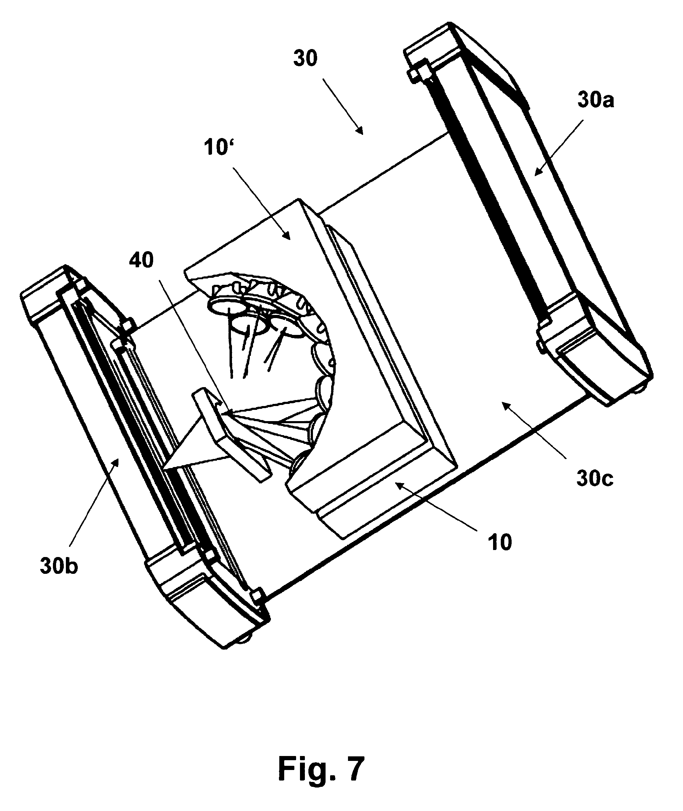

The lighting module 10 according to the preferred embodiment of the present invention comprises, furthermore, a plurality of light sources 24a to 24h arranged on the planar wall panels 22a to 22h. Preferably, each light source 24a to 24h comprises a light emitting diode (LED) arranged within a support or housing and a collimating lens forming the top of the light source. As can be taken from figures 1 to 4, the light sources 24a to 24h are arranged on the planar wall panels 22a to 22h such that the light emitted by the respective LEDs within the light sources is guided or focused by the respective collimating lenses onto a common illumination area 25. In use, this common illumination area 25 can be coupled to or coincide with a further lens, an end of an optical fiber or a light input port of an imaging device (or just a lens or several lenses to provide light to the field of view), as will be discussed in more detail under reference to figures 5 to 8 further below. For instance, virtually any commercially available surgical microscope is provided with a light input port so that such a microscope is well suited to be supplied with light provided by the lighting module 10 according to the present invention.

As can be taken especially from figures 1, 2 and 4 the light sources 24a to 24h and the respective planar wall panels 22a to 22h of the base body are arranged such that the common illumination area 25 illuminated by the light sources 24a to 24h is not "symmetrical" with respect to the base body of the lighting module 10 according to the preferred embodiment of the present invention. In other words, the common illumination area 25 (or more precisely the center thereof) illuminated by the light sources 24a to 24h is offset or displaced from the plane running parallel to and being disposed half way between the top wall 18 and the bottom wall 16 of the base body in the direction of the bottom wall 16. As the person skilled in the art will appreciate this offset/asymmetry and the degree thereof can be achieved/adjusted (i) by positioning the supports enclosing a respective LED on each planar wall panel 22a to 22h along a circular arc whose origin coincides with the center of the common illumination area 25 and/or (ii) by vertically inclining the planar wall panels 22a to 22h in the direction of the common illumination area 25.

Despite the above described asymmetry of the lighting module 10 according to the preferred embodiment of the present invention with respect to the plane running parallel to and being disposed half way between the top wall 18 and the bottom wall 16 of the base body, the person skilled in the art will appreciate from looking at figures 1 to 4 that the lighting module 10 according to the preferred embodiment of the present invention, however, is configured symmetrical with respect to a plane running parallel to the end walls 12, 14 of the base body and positioned half way therebetween.

According to a preferred embodiment of the lighting module 10 the base body has the following dimensions: a length a of approximately 23 cm, a depth b of approximately 10 cm and a height c of approximately 3.5 cm. The base body of the lighting module 10 can be made for example out of aluminum, either as a solid body or as a hollow body. The person skilled in the art will appreciate that in either case appropriately arranged and adapted supply and control lines will be incorporated in the base body in order to energize and control the plurality of light sources 24a to 24h. To this end, the lighting module 10 can further comprise a control unit for individually controlling each LED within the plurality of lighting sources 24a to 24h. Lighting sources 24a to 24h and corresponding LEDs which are suited to be employed in the light module 10 according to the present invention are well known to the person skilled in the art and readily commercially available and, therefore, not described in any greater detail. The lighting module 10 can further comprise a cooling device internal or external to the base body for cooling the base body and dispersing the heat produced by the light sources 24a to 24h. For instance, a Peltier element can be employed as a suitable cooling device.

In certain medical applications plastic materials are used, such as dental fillings, which are sensitive with respect to light. These plastic materials should not cure too rapidly during the insertion of the filling into the tooth. To this end, conventional lighting systems, such as arc lamps, are provided with a yellow filter, as yellow light leads to a slower curing in comparison to white light. According to the present invention preferably LEDs can be employed in the lighting module 10 or the cascading arrangement of lighting modules 10, 10' described below under reference to figures 5 to 8 which emit white light, yellow light or blue light. The lighting module 10 can comprise only white LEDs, white and yellow LEDs, white and blue LEDs, yellow and blue LEDs or white, yellow and blue LEDs. With an arrangement comprising white and yellow LEDs it is possible to provide only yellow light, e.g. for a less rapid curing of a dental filling, by simply switching the white LEDs off and turning only the yellow LEDs on. The person skilled in the art will appreciate that to this end the lighting module 10 according to the present invention preferably can be controlled and driven by the appropriately configured conventional control unit mentioned above.

After a plastic dental filling has been provided the filling is irradiated with blue light in order to accelerate the curing thereof. Conventionally, this is done by means of a hand-piece configured to guide blue light into the direction of the dental filling. According to the present invention, this can be easily achieved by means of the lighting module 10 according to the preferred embodiment of the present invention comprising blue LEDs and an optical fiber (not shown) connected thereto. As in the case with yellow light, blue light can be provided by turning on only the blue LEDs and turning off the LEDs having different colours, e.g. white LEDs and/or yellow LEDs. It is also possible that the lighting module 10 or the back-to-back arrangement of lighting modules described below feed light into an input port of an imaging device as well as an end face of an optical fiber by means of a duplexer or switch.

Figures 5 to 8 show an advantageous back-to-back arrangement of two lighting modules 10, 10' according to a preferred embodiment of the present invention within a first portion of a housing or support frame 30. The top wall 18 of a first lighting module 10 is removably or permanently mounted to the back side 30c of the housing 30 in a face contacting relationship. As the person skilled in the art will appreciate this can be achieved for instance by mounting the first lighting module 10 by means of screws and cooperating threads (not shown) to the back side 30c of the housing 30. As can be taken from figures 5 to 7, a second lighting module 10' substantially similar to the first lighting module 10 is mounted to the first lighting module 10 in such a way that the bottom wall of the second lighting module 10' is aligned with the bottom wall of the first lighting module 10 in a spaced face to face relationship. Also, in this case the bottom wall of the second lighting module 10' could be mounted to the bottom wall of the first lighting module 10, for instance, by means of screws and cooperating threads (not shown).

Due to the above described back-to-back arrangement (i.e. bottom wall facing bottom wall) of the first lighting module 10 and the second lighting module 10' in a cascading fashion and by appropriately choosing the size of the gap between the bottom wall of the first lighting module 10 and the bottom wall of the second lighting module 10' it is possible to bring the two common illumination areas of the light sources of the first and the second lighting modules 10, 10' according to the present invention into an overlapping relationship. In case the second lighting module 10' is mounted to the first lighting module 10 by means of screws and cooperating threads, the size of the gap between these lighting modules 10, 10' (i.e. the perpendicular distance between the bottom walls of the first and the second lighting modules 10, 10') is easily adjustable. The person skilled in the art will appreciate that the size of the gap will depend on the amount of the above described offsets of the common illumination areas (which preferably should be equal) of the first and the second lighting modules 10, 10'. As described above, this offset, in turn, primarily depends on the vertical inclination of the planar wall panels of the lighting modules 10, 10'.

Obviously by means of the above described cascading back-to-back arrangement of two lighting modules according to the present invention it is possible to provide twice the illuminating power of a single lighting module according to the present invention. The person skilled in the art will, thus, appreciate that for instance with the arrangement shown in figures 5 to 8 including 16 LEDs feeding light into a common port (as will be described in more detail further below) it is already possible to provide the illuminating powers of small conventional xenon or arc lamps. Using more than 8 LEDs in a lighting module will provide even larger illuminating powers. Alternatively or additionally, the present invention contemplates the addition of further lighting modules (e.g. two further lighting modules) of the type as described above to the back-to-back arrangement shown in figures 5 to 8. These additional lighting modules would have to be arranged with respect to the back-to-back arrangement shown in figures 5 to 8 in such an orientation that their common illumination areas would overlap with the already overlapping common illumination areas of the first and the second lighting module 10, 10' of the back-to-back arrangement shown in figure 5 to 8. The person skilled in the art will appreciate that in such a case the housing 30 would have to be appropriately modified in order to accommodate more than then two lighting modules 10, 10'.

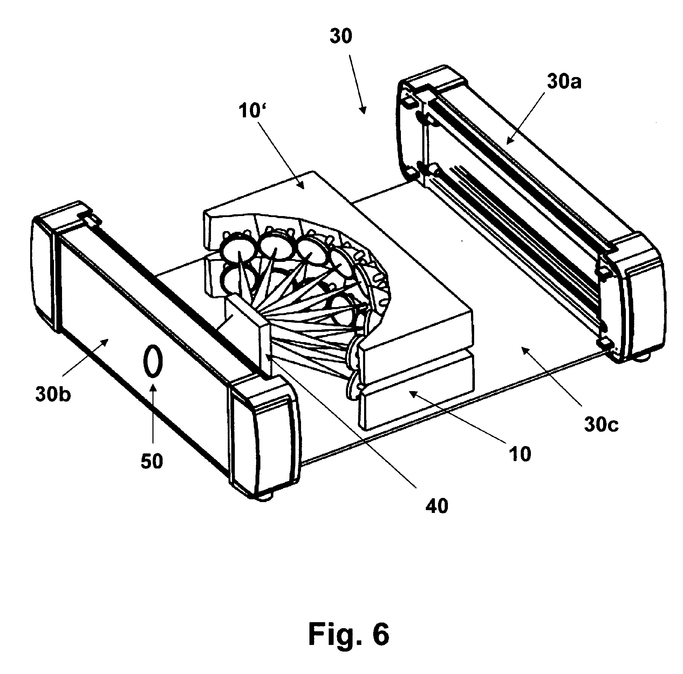

The housing 30 shown in figures 5 to 8 comprises a back side or back wall 30c and an upper and a lower attachment element 30a and 30b for attaching a cover (not shown) thereto and thereby enclosing the above described back-to-back arrangement of the first and the second lighting modules 10; 10' in the housing 30. The first lighting module 10 and the second lighting module 10' are arranged within the housing 30 such that their common illumination areas coincide with the position of a optical element 40 (e.g. a collimating lens) which can also be attached to the back side 30c of the housing 30. The optical element 40 directs the light emitted by the light sources of the first and the second lighting modules 10, 10' in the direction of the lower attachment element 30b of housing 30. As can be seen in figure 5 and 6, substantially in the center of the lower attachment 30b of housing 30 an aperture is provided such that light emanating from the first and second lighting modules 10, 10' and redirected by the optical element 40 can exit the housing and be feed into a standard light input port, an end of a glass fiber or an interface of an imaging unit, such as a surgical microscope. Alternatively, an end of a glass fiber already could be positioned at the position of the optical element 40 shown in figures 5 to 8. In such a case, the light emanating from the light sources of the first and the second lighting module 10, 10' could directly be coupled into the glass fiber and no optical element would e necessary.

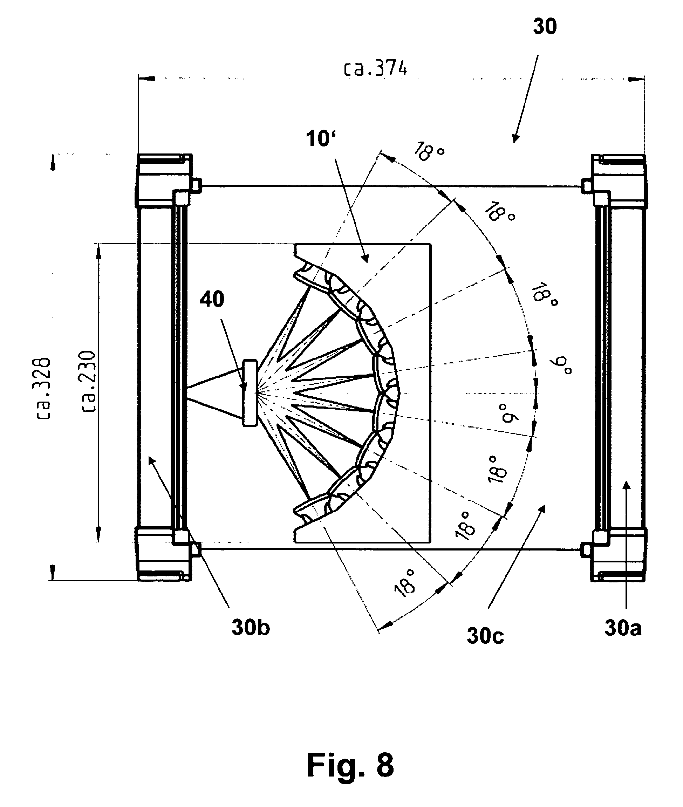

Figure 8 shows a plan view of the above described preferred embodiment of the back-to-back arrangement of the first and the second lighting module 10, 10' according to the present invention. As can be taken from that figure the angle between the central axes of two light beams produced by two adjacent LEDs preferably is about 18°. The housing 30 preferably has a length of about 32.8 cm, a height of about 37.4 cam and a depth of about 9.9 cm.

The present invention as described in detail above is not limited to the particular devices, uses and methodology described as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step.

Several documents are cited throughout the text of this specification. Each of the documents cited herein (including all patents, patent applications, scientific publications, manufacturer's specifications, instructions, etc.), whether *supra* or *infra,* are hereby incorporated by reference in their entirety. Nothing herein is to be construed as an admission that the invention is not entitled to antedate such disclosure by virtue of prior invention.

## Claims

1. Lighting module (10, 10'), comprising:
a base body of cuboid shape comprising two end walls (12, 14), a bottom wall, a top wall (18) and a first side wall (20) and being further defined by a substantially arc shaped cut-out in the second side wall thereof, wherein the portion of the base body defined by the arc shaped cut-out is made up of a plurality of planar wall panels (22a-h) arranged side-by-side; and
a plurality of light sources (24a-h) each comprising a support enclosing a respective LED and a respective collimating lens mounted on top of each support;
wherein each planar wall panel (22a-h) supports a respective light source of the plurality of light sources such that the central axis of the light beam produced by each LED and focused by the respective collimating lens runs essentially normal to the respective planar wall panel (22a-h); and
wherein the plurality of planar wall panels (22a-h) are arranged such that light beams produced by the plurality of LEDs are directed at a common illumination area (25).

2. Lighting module (10, 10') according to claim 1, wherein the plurality of planar wall panels (22a-h) are arranged such that light beams produced by the plurality of LEDs are directed at the common illumination area (25) which is offset from the plane running parallel to and being disposed half way between the top wall (18) and the bottom wall of the base body in the direction of the bottom wall.

3. Lighting module (10, 10') according to claims 1 or 2, wherein the positions of the supports enclosing a respective LED on each planar wall panel (22a-h) lie along a circular arc whose origin coincides with the center of the common illumination area (25) and/or the planar wall panels (22a-h) are vertically inclined in the direction of the common illumination area (25).

4. Lighting module (10, 10') according to claim 1, wherein the endpoints of the cut-out are located close to the respective end walls (12, 14) of the base body and the apex of the cut-out lies more than half way in the direction of the first side wall (20) of the base body.

5. Lighting module (10, 10') according to any one of claims 1 to 4, wherein the plurality of LEDs comprises at least one white LED.

6. Lighting module (10, 10') according to any one of claims 1 to 4, wherein the plurality of LEDs comprises at least one yellow LED.

7. Lighting module (10, 10') according to any one of claims 1 to 4, wherein the plurality of LEDs comprises at least one blue LED.

8. Lighting module (10, 10') according to any one of the preceding claims further comprising a control unit for individually controlling the LEDs.

9. Lighting module (10, 10') according to any one of the preceding claims, wherein the lighting module (10, 10') comprises eight LEDs.

10. Lighting module (10, 10') according to claim 9, wherein the angle between the central axes of two light beams produced by two adjacent LEDs is about 18°.

11. Lighting module (10, 10') according to any one of the preceding claims, wherein the base body has a length (a) of approximately 23 cm, a height (b) of approximately 3.5 cm and a depth (c) of approximately 10 cm.

12. Lighting module (10, 10') according to any one of the preceding claims, wherein the base body is solid or hollow and made of aluminium.

13. Lighting module according to any one of the preceding claims, further comprising a cooling device embedded within the base body.

14. Arrangement of at least two lighting modules (10, 10') according to any one of the preceding claims, wherein the bottom walls of the at least two lighting modules (10, 10') are arranged in a face contacting, spaced relationship such that the common illumination areas of the two lighting modules (10, 10') substantially overlap.

15. Arrangement according to claim 14, wherein the arrangement is mounted to a housing (30) and the substantially overlapping common illumination areas coincide with a light input port of an external imaging device.

16. Arrangement according to claim 15, wherein the external imaging device is a surgical microscope.

17. Arrangement according to claim 14, wherein the arrangement is mounted to a housing (30) and the substantially overlapping common illumination areas coincide with an end face of an optical fiber.

18. Arrangement according to claim 17, wherein the optical fiber is connected to a hand piece for supplying light to a field of interest, especially blue light, to irradiate a plastic dental filling in order to accelerate the curing thereof.
